# EUROPÄISCHE PATENTSCHRIFT

(11) **EP 3 662 306 B1**
(45) Veröffentlichungstag und Bekanntmachung des Hinweises auf die Patenterteilung: **10.03.2021**
(21) Anmeldenummer: 18739874.8
(22) Anmeldetag: 19.07.2018
(51) Int. Cl.: G01T 3/00

(54) **NEUTRONENDETEKTOR**
NEUTRON DETECTOR
DÉTECTEUR DE NEUTRONS

(30) Priorität: 04.08.2017 EP 17184906
(43) Veröffentlichungstag der Anmeldung: 10.06.2020
(73) Patentinhaber: Helmholtz-Zentrum Geesthacht Zentrum für Material- und Küstenforschung GmbH, 21502 Geesthacht (DE)
(72) Erfinder: BURMESTER, Jörg, 21481 Lauenburg (DE); NOWAK, Gregor Jacek, 21039 Hamburg (DE); PLEWKA, Jörn, 21502 Geesthacht (DE); JACOBSEN, Christian, 21423 Winsen (DE); GREGERSEN, Carsten Peter, 21481 Lauenburg (DE); PULS, Wolfgang, 21481 Lauenburg (DE); BELDOWSKI, Andreas, 23568 Lübeck (DE); SIEMERS, Dirk Jan, 22946 Dahmker (DE); KIEHN, Rüdiger, 21039 Börnsen (DE); KLEEBAND, Sven, 21502 Geesthacht (DE); BÖTTCHER, Thorsten, 21502 Geesthacht (DE); MUSIELAK, Gerd, 21502 Geesthacht (DE); SITKO, Erik, 25335 Altenmoor (DE); HEDDE, John, 21403 Wendisch Evern (DE)
(74) Vertreter: Uexküll & Stolberg
(86) Internationale Anmeldenummer: PCT/EP2018/069577
(87) Internationale Veröffentlichungsnummer: WO 2019/025196

(56) Entgegenhaltungen:
- US-A1- 2013 068 957
- US-A1- 2013 091 763
- US-B1- 9 116 249
- SANABRIA J C ET AL: "Parallel-plate avalanche detectors with anode wire grids", NUCLEAR INSTRUMENTS & METHODS IN PHYSICS RESEARCH. SECTION A: ACCELERATORS, SPECTROMETERS, DETECTORS, AND ASSOCIATED EQUIP, ELSEVIER BV * NORTH-HOLLAND, NL, Bd. 441, Nr. 3, 1. März 2000 (2000-03-01), Seiten 525-534, XP004191447, ISSN: 0168-9002, DOI: 10.1016/S0168-9002(99)00857-8
- PISCITELLI F ET AL: "Study of a high spatial resolution-based thermal neutron detector for application in neutron reflectometry: the Multi-Blade prototype", JOURNAL OF INSTRUMENTATION, INSTITUTE OF PHYSICS PUBLISHING, BRISTOL, GB, Bd. 9, Nr. 3, 12. März 2014 (2014-03-12), XP020259084, ISSN: 1748-0221, DOI: 10.1088/1748-0221/9/03/P03007 [gefunden am 2014-03-12]
- J C Buffet ET AL: "2012 IEEE Nuclear Science Symposiwn and Medical Imaging Conference Record (NSS/MIC) Study of a 10 B-based Multi-Blade detector for Neutron Scattering Science", , 15. November 2012 (2012-11-15), XP055118899, Gefunden im Internet: URL:http://ieeexplore.ieee.org/ielx7/65319 26/6551044/06551086.pdf?tp=&arnumber=65510 86&isnumber=6551044 [gefunden am 2014-05-20]

## Beschreibung

Die vorliegende Erfindung betrifft Neutronendetektoren sowie deren Verwendung.

### HINTERGRUND DER ERFINDUNG

Neutronendetektoren dienen dem Nachweis, der Messung des Flusses und der Spektroskopie von freien Neutronen, zum Beispiel bei der Strahlenschutzüberwachung oder in der Grundlagenforschung. Da Neutronen aufgrund ihrer fehlenden Ladung nur schwach mit Materie wechselwirken, müssen sie über Kernreaktionen mit einem geeigneten Neutronenabsorbermaterial nachgewiesen werden, bei denen Ladungsträger oder geladene Radionuklide entstehen, die oder das mit geeigneten Detektoren, zum Beispiel mit einem Zählgas befüllten Zählrohren detektierbar sind.

Die Wechselwirkung von Teilchen mit dem Neutronenabsorbermaterial wird durch den Wirkungsquerschnitt σ beschrieben, der die Dimension einer Fläche mit der Einheit 1 barn (10-24 cm²) besitzt. Der totale Wirkungsquerschnitt σₜₒₜ berechnet sich aus der Anzahl der Wechselwirkungen pro Zeit geteilt durch die einfallende Teilchenstromdichte. Die bei der Wechselwirkung erzeugten Sekundärteilchen sollten eine ausreichende freie Weglänge im Zählgas haben, so dass diese Teilchen den sensitiven Bereich des Detektors erreichen können und dort eine hinreichend große Energie zum Nachweis deponieren können. Für die Detektion ist dann die Umwandlung der deponierten Energie in Ionisation von wesentlicher Bedeutung.

Nachfolgend werden gängige Neutronenabsorbermaterialien beschrieben:
Das ³He-Isotop (³He + n → ³H + ¹H + 0,764 MeV; σ = 5.327 barn), ein Material, das nach Neutroneneinfang ein Proton und ein Triton erzeugt, ist weit verbreitet in Proportionalzählrohren. Der Vorteil sind große Wirkungsquerschnitte und eine niedrige Kernladungszahl (Z = 2), welche eine geringe γ-Sensitivität des Detektors garantiert. Ein Nachteil ist die lange Wegstrecke des Reaktionsproduktes im Gas, dies wirkt sich negativ auf die Ortsauflösung aus. Eine Neutronendetektoranordnung mit einer Vielzahl von separaten Neutronendetektoren auf ³He-Basis ist beispielsweise aus der WO 2015/088748 A1 bekannt.

Das Konvertermaterial ⁶Li (⁶Li + n → ³H + α + 4,78 MeV; σ = 940 barn) wird meistens in Szintillatoren verwendet, entweder als Dotierstoff oder als Bestandteil des Szintillatorkristalls. Es kann aber auch als Konverterfolie in Gasdetektoren eingesetzt werden. Der große Vorteil ist die große freiwerdende Energie beim Reaktionsprozess. Leider ist der Wirkungsquerschnitt relativ gering und die Handhabung kompliziert. Eine Neutronendetektoranordnung mit einer Vielzahl von Neutronendetektorelementen auf ⁶Li-Basis ist beispielsweise aus der WO 2015/173540 A1 bekannt. Als Szintillationsmaterial wird ZnS(Ag) verwendet, das mit ⁶LiF als Neutronenabsorptionsmaterial vermengt ist.

¹⁰B (¹⁰B + n → ⁷Li + α + 2,792 MeV (6%); σ = 3.842 barn) wird in Gasdetektoren bei BF₃-Füllungen verwendet, das auf Grund seiner Giftigkeit schwer handhabbar ist. In Festkörperdetektoren wird es als chemisch inertes B₄C entweder als Dotierstoff oder als dünne Konverterfolie verwendet. Der Wirkungsquerschnitt ist um bis zu 4 mal größer als der von ⁶Li, und die freiwerdende Energie ist ausreichend, um ein detektierbares Signal zu erzeugen. Eine Neutronendetektoranordnung mit einer Vielzahl von polygonalen Neutronendetektorelementen, die mit ¹⁰B dotiert sind, ist beispielsweise aus der EP 3 187 902 A1 bekannt.

Gadolinium hat sieben stabile natürliche Isotope, wobei ¹⁵⁷Gd (15,68% natürlicher Anteil) von allen bekannten Atomen mit 254.000 barn den größten bekannten Einfangquerschnitt für thermische Neutronen aufweist (¹⁵⁷Gd + n → ¹⁵⁸Gd* → ¹⁵⁸Gd + γ + e⁻ + 29 keV-181 keV; σ = 254.000 barn) . Auch das Isotop ¹⁵⁵Gd mit einer relativen Häufigkeit von 14,73 Prozent besitzt noch einen hohen Einfangquerschnitt von 61.000 barn (¹⁵⁵Gd + n → ¹⁵⁶Gd∗ → ¹⁵⁶Gd + γ + e⁻ (29 keV - 181 keV; σ = 61000 barn). Natürliches Gadolinium bzw. Gadolinium mit einer natürlichen Isotopenverteilung besitzt einen gemittelten Einfangquerschnitt von 49.000 barn. Allerdings wird Gadolinium auf Grund der hohen Kosten und schwierigen Handhabung nicht häufig verwendet. Ein Neutronendetektor, der Gadolinium verwendet, ist beispielsweise aus der DE 199 614 452 A1 bekannt.

Bisherige Neutronendetektoren verwenden einen äußeren Druckbehälter, der die erforderlichen Fülldrücke (mehrerer MPa) des mit einem Zählgas befüllten Detektionsvolumens gewährleistet. Die Anwesenheit eines Druckbehälters und der damit verbundenen gasdichten elektrischen Durchführungen ist mit einem Zusatzaufwand verbunden. Das vergleichsweise hohe Gewicht des Detektors mit äußerem Druckbehälter erschwert neben der Herstellung auch die Handhabung des Neutronendetektors im Betrieb. Zudem ist es bislang nicht möglich, großflächige (m²-Klasse) Neutronendetektoren mit einem hohen Einfangsquerschnitt bei gleichzeitiger hoher Ortsauflösung herzustellen.

Eine Aufgabe der vorliegenden Erfindung ist es einen Neutronendetektor bereitzustellen, der eine ähnlich hohe Effizienz wie ein Neutronendetektor auf ³He-Basis aufweist, jedoch ohne einen äußeren Druckbehälter auskommt. Die Detektoren sollen zudem eine große Nachweisfläche bei gleichzeitig hoher Ortsauflösung haben.

Mehrere ähnliche Neutronendetektoren sind in der Hintergrundkunst bekannt, zum Beispiel offenbart US 2013/091763 A1 einen Neutronendetektor, der eine Stapelanordnung von zwei oder mehr Detektorelementen mit jeweils zwei zueinander parallel angeordneten Substratplatten aus einem ersten neutronentransparenten Material umfasst, die auf einander zugewandten Seiten mit einem Neutronenabsorbermaterial beschichtet sind, und zwischen den einander zugewandten, beschichteten Substratplatten ein mit einem Zählgas definiert ist, in dem zwei zu den Substratplatten parallel angeordnete Elektrodendrahtebenen mit in den jeweiligen Elektrodendrahtebenen parallel verlaufenden Elektrodendrähten angeordnet sind und die Elektrodendrahtebenen mittels eines Abstandsrahmens voneinander beabstandet sind. "Study of a high spatial resolution-based thermal neutron detector for application in neutron reflectometry: the Multi-Blade prototype", von F Piscitelli et al. und "2012 IEEE Nuclear Science Symposiwn and Medical Imaging Conference Record (NSS/MIC) Study of a 10 B-based Multi-Blade detector for Neutron Scattering Science", von J C Buffet et al. offenbaren ähnliche Neutronendetektoren wie das oben erwähnte '763-Patent aber ohne die zwei zueinander parallel angeordneten Substratplatten.

### ZUSAMMENFASSUNG DER ERFINDUNG

Gelöst wird die Aufgabe durch einen Neutronendetektor mit den Merkmalen des Patentanspruchs 1.

An die Elektrodendrähte wird eine Spannung, üblicherweise eine Hochspannung (≥ +/-1 kV) angelegt. Durch eine angelegte Hochspannung werden die Ladungen, die mittels des Neutronenabsorbermaterials erzeugt werden, beschleunigt so dass eine Gasverstärkung durch Ladungsvervielfältigung im Zählgas entsteht und die so entstandene Ladungslawine zu den Elektrodendrahtebenen übertragen. Die Elektrodendrähte der beiden Elektrodendrahtebenen sind bevorzugt in einem rechten Winkel in Bezug auf die Elektrodendrähte der jeweils anderen Elektrodendrahtebene zur Bildung eines Elektrodendrahtgitters angeordnet, so dass sich mittels einer Laufzeitmessung der Signale auf einer Delay-Linie der Ort des Neutronenereignisses bestimmen lässt.

Das erste neutronentransparente Material der Substratplatten und das zweite neutronentransparente Material des selbsttragenden Rahmens kann jedes bearbeitbare Material sein, das eine ausreichende Neutronentransparenz aufweist. Bevorzugt ist das erste neutronentransparente Material der Substratplatten und/oder zweite das neutronentransparente Rahmenmaterial aus Kupfer oder insbesondere aus Aluminium ausgewählt. Weiter bevorzugt sind das erste und das zweite neutronentransparente Material gleich. Die Substratplatten haben bevorzugt eine Stärke zwischen 20 µm und 600 µm. Die selbsttragenden Rahmen haben bevorzugt eine Stärke von 2 bis 5 mm und bevorzugt eine Rahmenbreite, je nach Größe des Rahmens, von 1 cm bis 20 cm. "Selbsttragend" bedeutet im erfindungsgemäßen Zusammenhang, dass der Rahmen keine zusätzlichen Stützen aufweist. Bevorzugt sind die selbsttragenden Rahmen jeweils einstückig.

Die beschichteten Substratplatten sind bevorzugt rechteckig, insbesondere quadratisch und haben bevorzugt eine Seitenlänge von 20 cm bis 2 m, insbesondere von 50 cm bis 1,2 m. Mit dem erfindungsgemäßen Detektoraufbau lassen sich folglich Neutronendetektoren mit außergewöhnlich großer Nachweisfläche (m²-Klasse) bei gleichzeitig hoher Ortsauflösung herstellen.

Das Neutronenabsorbermaterial kann ⁶Li, ¹⁰B oder Gadolinium umfassen und ist besonders bevorzugt ¹⁰B₄C. Die ¹⁰B₄C-Beschichtung ist vorzugsweise mit einer Schichtdicke von 500 nm bis 1,5 µm, bevorzugter 1 µm bis 1,2 µm auf den Substratplatten aufgetragen. Vorzugsweise ist die Beschichtung durch Sputtern aufgetragen.

Die Substratplatten aus einem ersten neutronentransparenten Material sind bevorzugt mit dem selbsttragenden Rahmen aus einem zweiten neutronentransparenten Material verklebt. Bevorzugt ist für die Verklebung Epoxidharzkleber oder Acrylharzkleber verwendet.

Als Zählgas im Messraum wird vorzugsweise ein Gemisch aus Argon und CO₂ (Ar/CO₂) oder CF₄ oder Gemische derselben verwendet. Der Zählgasdruck im Messraum beträgt bevorzugt 100 bis 130 kPa. An die Elektrodendrähte wird bevorzugt eine Hochspannung von ≥ 1 kV, vorzugsweise zwischen 1,5 und 3,5 kV angelegt, wobei die Spannung als Absolutwert angegeben ist.

Die Elektrodendrähte in den beiden Elektrodendrahtebenen haben jeweils einen Abstand von 1 bis 3 mm, bevorzugt etwa 2 mm. Der Abstand der beiden Elektrodendrahtebenen zueinander beträgt vorzugsweise zwischen 1,2 und 4 mm, bevorzugt zwischen 1,6 und 3 mm.

Gemäß der Erfindung ist es vorgesehen, dass der erfindungsgemäße Neutronendetektor eine Stapelanordnung von mehreren, beispielsweise 2 und mehr, bevorzugt zwischen 2 und 18, besonders bevorzugt zwischen 4 und 15, insbesondere zwischen 8 und 12, Detektorelementen umfasst. Auch gemäß der Erfindung sind jeweils Detektorelemente so angeordnet, dass die jeweiligen selbsttragenden Rahmen deckend aneinandergefügt sind, wobei an mindestens einer Seite, bevorzugt an zwei Seiten der aneinandergefügten selbsttragenden Rahmen ein Gasdurchlass zur Bildung eines veränderlichen Ausgleichsvolumens vorgesehen ist. Bevorzugt sind die deckend aneinandergefügten selbsttragenden Rahmen miteinander verklebt, wobei ebenfalls bevorzugt ein Acrylharzkleber verwendet ist.

Alternativ kann bei dieser Stapelanordnung ein selbsttragender Rahmen beidseitig mit Substratplatten aus einem ersten neutronentransparenten Material bespannt sein, wobei der beidseitig bespannte selbsttragende Rahmen den Abschluss zweier, aneinandergrenzender Detektorelemente bildet, wobei an mindestens einer Seite, bevorzugt an zwei Seiten der aneinandergefügten selbsttragenden Rahmen ein Gasdurchlass zur Bildung eines veränderlichen Ausgleichsvolumens vorgesehen ist.

Die Rahmeninnenseite des selbsttragenden Rahmens bildet in der Stapelanordnung, zusammen mit den beschichteten Substratplatten, die darauf aufgespannt sind, ein veränderliches Ausgleichgasvolumen. Werden die Nachweisflächen sehr groß (z.B. > 0,5 m²), so steigen auch die mechanischen Herausforderungen in Bezug auf den Aufbau der Neutronendetektoren. Um eine ungestörten Ortsauflösung der Messung erhalten, sollten die beschichteten Substratplatten möglichst ebenmäßig sein. Ein kurzer Abstand zwischen beschichteten Substratplatten und Elektrodendrahtebenen in Kombination mit der angelegten Hochspannung während der Messung führt nämlich dazu, dass sich beschichteten Substratplatten und Elektrodendrahtebenen anziehen, so dass sich die Substratplatten krümmen, was zu Hochspannungsüberschlägen führen kann. Über den Gasraum mit einem veränderlichen Ausgleichsvolumen zwischen den Detektorelementen ist es möglich die Krümmung der Substratplatten auszugleichen. Der Abstand zwischen Drahtebenen und Substratplatten kann so eingestellt werden, dass beide Ebenen parallel zueinander über die ganze Fläche ausgerichtet sind. Die zwischen den Innenseiten der Substratplatten liegende Detektionsebene ist mit einer betriebsmässig unveränderlichen Menge eines Zählgases befüllt. Auch das den jeweiligen Substratplatten gegenüberliegende Ausgleichsvolumen ist mit einem Gas gefüllt. Über Drucksensoren können beide Volumina (Detektor- und Ausgleichsvolumen) überwacht werden. Bei Bedarf wird der Druck des Ausgleichsvolumens über Steuerelemente angepasst, um das Auslenken der mit einem Neutronenabsorbermaterial beschichteten Substratplatten zur Elektrodendrahtebene zu vermeiden. Ein äußerer Druckbehälter zur Steuerung bzw. Aufrechterhaltung des Drucks im Messraum kann somit entfallen. Als Gas im Gasraum mit einem veränderlichen Ausgleichsvolumen ist jedes neutronentransparente Gas verwendbar, da es nicht mit dem Zählgas in Kontakt tritt. Vorzugsweise wird allerdings das gleiche Gas, wie das Zählgas verwendet.

Bevorzugt weisen die in Stapelanordnung verbundenen Detektorelemente eine unterschiedliche Beschichtungsdicke auf, etwa eine ansteigende Beschichtungsdicke von 500 µm im ersten Detektorelement (z.B. im 1. Modul) bis zu 1,5 µm im letzten Detektorelement (z.B. im 12. Modul).

Bevorzugt ist jedes Detektorelement in der Stapelanordnung mit einer eigenen Auswertelektronik ausgestattet. Dabei wird eine Auswerteelektronik gemäß dem Stand der Technik verwendet, bevorzugt eine höher integrierte, fernsteuerbare Auswertelektronik. Sie kann einen Vorverstärker und eine Constant-Fraction-Einheit pro Kanal (4 Kanäle pro Detektorebene) aufweisen. Die Signale werden üblicherweise an einem FPGA-Board angeschlossen und die Flanken, (pos. und neg.) werden mit einem Zeitstempel versehen. Besonders ist eine Delay-Line, die aus einer Leiterplatte besteht, in der die Verzögerungselemente integriert sind. Diese kann durch hochspannungsfeste Übertrager an die Vorverstärker angeschlossen sein und auf dem Hochspannungspotential betrieben werden.

### DETAILIERTE BESCHREIBUNG DER ERFINDUNG

Die Erfindung wird nun unter Bezugnahme auf die angehängten Figuren näher erläutert, die die Erfindung nicht einschränken, sondern lediglich beispielhaft erläutern.

In den Figuren stellt dar:
**Fig. 1** eine Schemazeichnung eines erfindungsgemäßen Detektorelements;
**Fig. 2** eine Schemazeichnung in Draufsicht der einzelnen Bestandteile eines Detektorelements;
**Fig. 3** zwei selbsttragende Rahmen in Draufsicht, die zur Bildung einer Stapelanordnung von erfindungsgemäßen Detektorelementen deckend aneinandergefügt werden können; und
**Fig. 4** eine Schemazeichnung eines Neutronendetektors mit einer Stapelanordnung von 12 Detektorelementen, die zueinander parallel angeordnet sind.

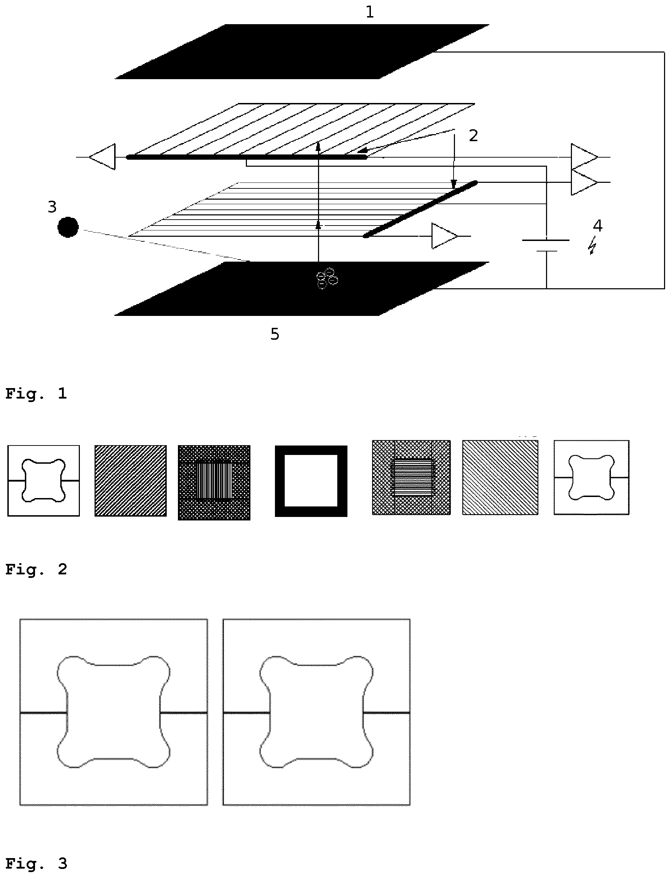

In Bezug auf **Fig. 1** werden schematisch zwei zueinander parallel angeordnete und einander zugewandte Neutronenabsorbermaterial-¹⁰B₄C-Schichten **1, 5** gezeigt, die auf zwei zueinander parallel angeordneten Substratplatten aus einem neutronentransparenten Material (nicht gezeigt) durch Sputtern aufgetragen wurden. Des Weiteren sind zwischen den einander zugewandten ¹⁰B₄C-Schichten **1, 5** zwei zueinander parallel verlaufende Elektrodendrahtebenen vorgesehen, wobei die Eletrodendrähte der beiden Elektrodendrahtebenen in einem Winkel von 90° in Bezug auf die Ausrichtung der jeweils anderen Elektrodendrahtebene zur Bildung eines Elektrodendrahtgitters angeordnet sind. An die Elektrodendrähte ist eine Hochspannung **4** (≥ +- 1 kV) angelegt. Spannungsänderungen werden an einer Delay-Linie **2** mit hoher Ortsauflösung erfasst.

Trifft ein Neutron **3** auf eine der ¹⁰B₄C-Schichten **1, 5** wird als Folge der resultierenden Kernreaktion mit dem ¹⁰B das Zählgas ionisiert und die Spannungsänderung durch das Elektrodengitter detektiert. Anstelle von ¹⁰B₄C sind auch andere feste Neutronenabsorbtionsmaterialen wie ⁶Li, das bevorzugt als ⁶LiF eingesetzt wird, oder Gadolinium zur Neutronendetektion im erfindungsgemäßen Neutronendetektor verwendbar. ¹⁰B₄C-Schichten sind auf Grund ihrer Handhabbarkeit und aus Kostengründen bevorzugt.

In **Fig. 2** ist eine Schemazeichnung in Draufsicht der einzelnen Bestandteile eines Detektorelements gezeigt. Von links nach rechts wird ein selbsttragender Rahmen aus einem neutronentransparenten Material gezeigt, der bevorzugt quadratisch ist. Auf beiden Längsseiten sind Kerben eingelassen, die bei Zusammenfügen zweier Rahmen einen Gasdurchlass bilden. Als nächstes wird eine mit einem Neutronenabsorbermaterial beschichtete Substratplatte gezeigt, die mit der der Beschichtung gegenüberliegenden Seite auf den selbsttragenden Rahmen gespannt und mit diesem verklebt wird. Das Verspannen erfolgt, damit die die Substratplatte und Beschichtung möglichst eben und faltenfrei aufgespannt werden. Zur Verspannung wird der selbsttragende Rahmen an seinen Quer- und Längsseiten etwas nach innen gedrückt, die Substratplatte mit der der Beschichtungsseite gegenüberliegenden Seite auf den Rahmen aufgeklebt und nach Aushärtung des Klebers entspannt. Auf die beschichtete Substratplatte wird eine Leiterplatte mit Elektrodendrahtebenen geklebt, die als drittes Element gezeigt sind. Der gleiche Aufbau wird in der Darstellung von rechts nach links wiederholt und die erhaltenen Aufbauten über einen Abstandsrahmen, der hier mittig dargestellt ist, in 90°-Versetzung miteinander verbunden. Der Gasraum wird mit einem Zählgas befüllt und gasdicht verklebt.

**Fig. 3** zeigt zwei selbsttragende Rahmen in Draufsicht, die jeweils eine Abschlussseite eines Detektorelements bilden. Auf beiden Längsseiten sind Kerben eingelassen, die bei Zusammenfügen zweier Rahmen einen Gasdurchlass mit einem innenliegenden Gasraum bilden. Durch den Gasdurchlass kann das Ausgleichsvolumen im Gasraum gesteuert werden, so dass eine Krümmung der Substratplatten dadurch ausgeglichen werden kann, indem der Gasdruck im Ausgleichsvolumen erniedrigt oder erhöht wird.

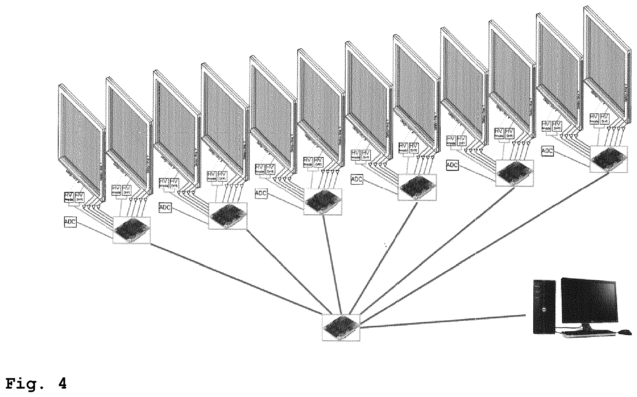

In **Fig. 4** ist eine Stapelanordnung von 12 Detektorelementen schematisch dargestellt, wobei jedes Detektorelement eine eigene Zählelektronik aufweist. Mit der gezeigten Stapelanordnung kann man eine Nachweisempfindlichkeit wie bei einem ³He-Zählrohr erreichen, jedoch bei einer sehr viel größeren Nachweisfläche, als die mit herkömmlichen Neutronendetektoren möglich ist.

Die erfindungsgemäßen Neutronendetektoren ermöglichen erstmals den Aufbau großen Detektorflächen von etwa 1 m² bis 2 m², mit einer Ortsauflösung der Neutronen von unter 2 mm. Beim modularen Aufbau in Stapelanordnung können zudem mit ³He-Zählrohren vergleichbare Nachweisempfindlichkeiten (ca. 60%) oder höher, bei höherer Anzahl an Detektorelementen, erzielt werden. Durch Verwendung dünner Substratplatten - wie Alumuniumblechen - und Wegfall der äußeren Druckbehälter sind die Neutronendetektoren trotz der großen Dimensionen vergleichsweise leicht und können kostengünstig hergestellt werden.

## Patentansprüche

1. Neutronendetektor, der eine Stapelanordnung von zwei oder mehr Detektorelementen mit jeweils zwei zueinander parallel angeordneten Substratplatten aus einem ersten neutronentransparenten Material umfasst, die auf einander zugewandten Seiten mit einem Neutronenabsorbermaterial (1, 5) beschichtet sind, und zwischen den einander zugewandten, beschichteten Substratplatten ein mit einem Zählgas gefüllter Messraum definiert ist, in dem zwei zu den Substratplatten parallel angeordnete Elektrodendrahtebenen mit in den jeweiligen Elektrodendrahtebenen (2) parallel verlaufenden Elektrodendrähten angeordnet sind und die Elektrodendrahtebenen mittels eines Abstandsrahmens voneinander beabstandet sind, **dadurch gekennzeichnet, dass** der Messraum gasdicht ist und die Substratplatten zwischen den Detektorelementen an einer dem Messraum abgewandten Seite jeweils auf einem selbsttragendem Rahmen aus einem zweiten neutronentransparenten Material zur Bildung eines Ausgleichvolumens aufgespannt sind, wobei jeweils zwei Detektorelemente so angeordnet sind, dass die jeweiligen selbsttragenden Rahmen deckend aneinandergefügt sind, wobei an mindestens einer Seite der aneinandergefügten selbsttragenden Rahmen ein Gasdurchlass zur Bildung eines veränderlichen Ausgleichsvolumens vorgesehen ist.

2. Neutronendetektor nach Anspruch 1, wobei das erste neutronentransparente Material der Substratplatten und das zweite neutronentransparente Material jeweils gleich und Kupfer oder Aluminium sind.

3. Neutronendetektor nach Anspruch 1, bei dem die Elektrodendrähte der beiden Elektrodendrahtebenen (2) in einem Winkel von 90° in Bezug auf die Ausrichtung der jeweils anderen Elektrodendrahtebene (2) zur Bildung eines Elektrodendrahtgitters angeordnet sind.

4. Neutronendetektor nach einem der vorgehenden Ansprüche, wobei die Elektrodendrähte in den beiden Elektrodendrahtebenen (2) jeweils einen Abstand von 1 bis 3 mm aufweisen.

5. Neutronendetektor nach einem der vorgehenden Ansprüche, wobei der Abstand der beiden Elektrodendrahtebenen (2) zueinander zwischen 1,2 und 4 mm beträgt.

6. Neutronendetektor nach einem der vorgehenden Ansprüche, wobei das Neutronenabsorbermaterial (1, 5) ⁶Li, ¹⁰B oder Gadolinium umfasst.

7. Neutronendetektor nach Anspruch 6, wobei das Neutronenabsorbermaterial (1, 5) ¹⁰B₄C ist.

8. Neutronendetektor nach einem der vorgehenden Ansprüche, wobei die Schichtdicke des Neutronenabsorbermaterials (1, 5) auf der Substratplatte 500 nm bis 1,5 µm beträgt.

9. Neutronendetektor nach Anspruch 8, wobei die Schichtdicke des Neutronenabsorbermaterials (1, 5) auf der Substratplatte 1 µm bis 1,2 µm beträgt.

10. Neutronendetektor nach Anspruch 1, der eine Stapelanordnung von 4 und 18 Detektorelementen umfasst.

11. Neutronendetektor nach Anspruch 10, der eine Stapelanordnung von 8 und 12 Detektorelementen umfasst.

12. Neutronendetektor nach einem der vorgehenden Ansprüche, wobei ein selbsttragender Rahmen beidseitig mit Substratplatten aus einem ersten neutronentransparenten Material bespannt ist, wobei der beidseitig bespannte selbsttragende Rahmen den Abschluss zweier, aneinandergrenzender Detektorelemente bildet und wobei an mindestens einer Seite der aneinandergefügten selbsttragenden Rahmen ein Gasdurchlass zur Bildung eines veränderlichen Ausgleichsvolumens vorgesehen ist.

13. Verwendung eines Neutronendetektors gemäß einem der Ansprüche 1 bis 12 zur Detektion von Neutronen.

## Claims

1. A neutron detector, comprising a stack arrangement of two or more detector elements, each with two mutually parallel substrate plates made from a first neutron-transparent material, which are coated on mutually facing sides with a neutron absorber material (1, 5), and there being defined between the coated substrate plates facing each other a measurement space filled with a counter gas, in which two electrode wire planes, arranged parallel to the substrate plates, having electrode wires running parallel in the respective electrode wire planes (2) are arranged, and the electrode wire planes being spaced apart from one another by means of a spacing frame, **characterized in that** the measurement space is gas-tight and the substrate plates being spanned between the detector elements at a side facing away from the measurement in each case on a self-supporting frame made of a second neutron-transparent material to form a compensation volume , wherein in each case two detector elements are arranged such that the respective self-supporting frames are joined together so as to cover one another, wherein a gas passage is provided at least at one side of the joined self-supporting frames, to form a variable compensation volume.

2. The neutron detector as claimed in claim 1, wherein the first neutron-transparent material of the substrate plates and the second neutron-transparent material are in each case identical and are copper or aluminum.

3. The neutron detector as claimed in claim 1, in which the electrode wires of the two electrode wire planes (2) are arranged at an angle of 90° with respect to the orientation of the respectively other electrode wire plane (2) to form an electrode wire grid.

4. The neutron detector as claimed in one of the preceding claims, wherein the electrode wires in the two electrode wire planes (2) in each case have a spacing of 1 to 3 mm.

5. The neutron detector as claimed in one of the preceding claims, wherein the spacing of the two electrode wire planes (2) relative to one another is between 1.2 and 4 mm.

6. The neutron detector as claimed in one of the preceding claims, wherein the neutron absorber material (1, 5) comprises ⁶Li, ¹⁰B or gadolinium.

7. The neutron detector as claimed in claim 6, wherein the neutron absorber material (1, 5) is ¹⁰B₄C.

8. The neutron detector as claimed in one of the preceding claims, wherein the layer thickness of the neutron absorber material (1, 5) on the substrate plate is 500 nm to 1.5 µm.

9. The neutron detector as claimed in claim 8, wherein the layer thickness of the neutron absorber material (1, 5) on the substrate plate is 1 µm to 1.2 µm.

10. The neutron detector as claimed in claim 1, comprising a stack arrangement of 4 and 18 detector elements.

11. The neutron detector as claimed in claim 10, comprising a stack arrangement of 8 and 12 detector elements.

12. The neutron detector as claimed in one of the preceding claims, wherein substrate plates made from a first neutron-transparent material are spanned on both sides of a self-supporting frame, wherein the self-supporting frame, on whose two sides the plates are spanned, forms the termination of two adjoining detector elements, and wherein a gas passage is provided at least at one side of the self-supporting-frames that have been joined together, to form a variable compensation volume.

13. The use of a neutron detector as claimed in one of claims 1 to 12 for detecting neutrons.

## Revendications

1. Détecteur de neutrons, qui comprend un ensemble empilé de deux ou plus de deux éléments détecteurs comportant chacun deux plaques de substrat qui sont constituées d'un premier matériau transparent aux neutrons, sont disposées parallèlement l'une à l'autre et sont revêtues d'un matériau absorbeur de neutrons (1, 5), sur des faces tournées l'une vers l'autre, et qui comprend, entre les plaques de substrat revêtues tournées l'une vers l'autre, un espace de mesure qui est rempli d'un gaz de comptage et dans lequel sont placés deux plans de fils électrodes, disposés parallèlement aux plaques de substrat et comportant des fils électrodes qui s'étendent parallèlement dans les plans de fils électrodes (2) respectifs, et les plans de fils électrodes sont espacés l'un de l'autre à l'aide d'un cadre d'espacement, **caractérisé en ce que** l'espace de mesure est étanche aux gaz et les plaques de substrat sont mises sous précontrainte, entre les éléments détecteurs, sur un côté détourné de l'espace de mesure, respectivement sur un cadre autoporteur constitué d'un deuxième matériau transparent aux neutrons, en vue de créer un volume de compensation, sachant que chaque fois deux éléments détecteurs sont disposés de manière à ce que les cadres autoporteurs respectifs soient assemblés de façon à coïncider, un passage de gaz, destiné à créer un volume de compensation variable, étant prévu sur au moins un côté des cadres autoporteurs assemblés.

2. Détecteur de neutrons selon la revendication 1, **caractérisé en ce que** le premier matériau transparent aux neutrons des plaques de substrat et le deuxième matériau transparent aux neutrons sont respectivement identiques et sont du cuivre ou de l'aluminium.

3. Détecteur de neutrons selon la revendication 1, dans lequel les fils électrodes des deux plans de fils électrodes (2) sont disposés sous un angle de 90° par rapport à l'orientation respectivement de l'autre plan de fils électrodes (2), en vue de former un réseau de fils électrodes.

4. Détecteur de neutrons selon l'une des revendications précédentes, dans lequel les fils électrodes dans les deux plans de fils électrodes (2) présentent un espacement respectif compris entre 1 et 3 mm.

5. Détecteur de neutrons selon l'une des revendications précédentes, dans lequel l'espacement réciproque des deux plans de fils électrodes (2) est compris entre 1,2 et 4 mm.

6. Détecteur de neutrons selon l'une des revendications précédentes, dans lequel le matériau absorbeur de neutrons (1, 5) comprend ⁶Li, ¹⁰B ou du gadolinium.

7. Détecteur de neutrons selon la revendication 6, dans lequel le matériau absorbeur de neutrons (1, 5) est du ¹⁰B₄C.

8. Détecteur de neutrons selon l'une des revendications précédentes, dans lequel l'épaisseur de couche du matériau absorbeur de neutrons (1, 5) sur la plaque de support est comprise entre 500 nm et 1,5 µm.

9. Détecteur de neutrons selon la revendication 8, dans lequel l'épaisseur de couche du matériau absorbeur de neutrons (1, 5) sur la plaque de support est comprise entre 1 µm et 1,2 µm.

10. Détecteur de neutrons selon la revendication 1, qui comprend un ensemble empilé de 4 et 18 éléments détecteurs.

11. Détecteur de neutrons selon la revendication 10, qui comprend un ensemble empilé de 8 et 12 éléments détecteurs.

12. Détecteur de neutrons selon l'une des revendications précédentes, dans lequel un cadre autoporteur est recouvert des deux côtés avec des plaques de substrat constituées d'un premier matériau transparent aux neutrons, le cadre autoporteur, qui est recouvert sur les deux côtés, formant la terminaison de deux éléments détecteurs adjacents, et un passage de gaz étant prévu sur au moins un côté des cadres autoporteurs assemblés, en vue de créer un volume de compensation variable.

13. Utilisation d'un détecteur de neutrons selon l'une des revendications 1 à 12, pour la détection de neutrons.
